# EUROPEAN PATENT APPLICATION

(11) **EP 1 950 937 A2**
(43) Date of publication of application: **30.07.2008**
(21) Application number: 08001613.2
(22) Date of filing: 29.01.2008
(51) Int. Cl.: H04M 1/02

(54) **Portable apparatus**

(30) Priority: 29.01.2007 KR 20070008859
(71) Applicant: Samsung Electronics Co., Ltd., Yeongtong-gu Suwon-si, Gyeonggi-do (KR)
(72) Inventor: Kim, Young-Hun, Suwon-si, Gyeonggi-do (KR); Im, Jin-Man, Suwon-si, Gyeonggi-do (KR); Kim, Sang-Kyun, Suwon-si, Gyeonggi-do (KR); Sohn, Young-Wook, Suwon-si, Gyeonggi-do (KR)
(74) Representative: Boakes, Jason Carrington

(57) **Abstract**

A portable apparatus includes a first housing (100), a second housing (200), a sliding housing (300), folding housing (400), and a connecting device (500). The second housing is coupled to the first housing by a first hinge part (150), the second housing being rotatable about a first hinge axis (A1) to fold onto and unfold from the first housing. The sliding housing faces the first housing and is coupled to the first housing by a sliding device (600). The sliding housing continues to face the first housing when the sliding housing is moved. The folding housing is coupled to the sliding housing by a second hinge part (250), the folding housing being rotatable about a second hinge axis (A2), and the connecting device is coupled to the first housing and the folding housing to slide the sliding housing in response to movement of the folding housing.

## Description

The present invention relates to a portable apparatus, such as a cellular phone, a PCS, a personal digital assistant (PDA), a hand held phone (HHP), or a desktop computer.

Portable apparatuses tend not only to be compact, slim, and light, but are also moving toward providing multimedia availability having a wider variety of functions, as well as toward emphasizing entertainment contents, such as games, amusement, etc.

In view of portability or convenience, conventional portable apparatuses may be classified as bar-type or folder-type communication apparatuses according to the external appearance thereof.

A folder-type portable apparatus is disclosed in U.S. Patent No. 6,865,406, which is hereby incorporated by reference.

Furthermore, portable apparatuses may also be classified as swing-type or sliding-type communication apparatuses according to the manner in which they open and close.

A sliding-type portable apparatus is disclosed in Korean Patent No. 2002-71911 in detail and a swing-type portable apparatus is disclosed in U.S. Application No. 10/822,380 in detail, both of which are hereby incorporated by reference.

In a conventional portable apparatus, data may be input and displayed data may be identified in a phone mode, which may be a mode for voice calling or text message sending. However, it may be inconvenient for a user to input data or identify displayed data in a multimedia mode.

When a portable apparatus is large, for example, when a portable apparatus includes a wide display part and a plurality of keys, the above-mentioned problems may be solved. However, this solution is contrary to size-reduction and portability.

Accordingly, it may be difficult to widen a display part of a conventional portable apparatus.

Furthermore, the convenience of a data input/out device has been recognized as an important concern for users.

Therefore, a portable apparatus including a data input/output device suitable for new interfacing environment, such as portable Internet, is needed.

It is an aim of the present invention to at least partly mitigate the above-mentioned problems.

Embodiments of the present invention provide a small portable apparatus that may be conveniently carried.

Embodiments of the present invention provide a portable apparatus in which movement of one keyboard of the portable apparatus causes movement of the other keyboard thereof, so that a user may conveniently open and close the keyboards.

Embodiments of the present invention provide a portable apparatus that may be conveniently operated in a game mode or a QWERTY mode while being carried.

Embodiments of the present invention provide a game operation and a data input operation, which may be conveniently performed using two hands, and may allow the user to watch a display part in a transverse mode while cradling the display part at an angle, thereby realizing an improved user interface (UI) environment with regard to data input/output.

Embodiments of the present invention provide a slim sliding portable apparatus.

Additional features of the invention will be set forth in the description which follows, and in part will be apparent from the description, or may be learned by practice of the invention.

Embodiments of the present invention provide a portable apparatus including a first housing, a second housing, a sliding housing, a folding hosing, and a connecting device. The second housing is coupled to the first housing by a first hinge part, the second housing being rotatable about a first hinge axis to fold onto and unfold from the first housing. The sliding housing faces the first housing and is coupled to the first housing by a sliding device. The sliding housing continues to face the first housing when the sliding housing moves. The folding housing is coupled to the sliding housing by a second hinge part, the folding housing being rotatable about a second hinge axis. The connecting device is coupled to the first housing and the folding housing to slide the sliding housing in response to movement of the folding housing.

Embodiments of the present invention provide a portable apparatus including a first housing, a display part, a first keyboard, a second keyboard, and a connecting device. The display part is coupled to the first housing by a first hinge part, the display part being rotatable about a first hinge axis to fold onto or unfold from the first housing. The first keyboard faces the first housing and coupled to the first housing by a sliding device. The first keyboard continues to face the first housing when it is moved. The second keyboard is coupled to the first keyboard by a second hinge part, the second keyboard being rotatable about the second hinge axis, and the connecting device is coupled to the first housing and the second keyboard to slide the first keyboard in response to movement of the second keyboard.

Embodiments of the present invention provide a portable apparatus including a first housing, a sliding housing, a folding housing, and a connecting device. The sliding housing faces the first housing and is coupled to the first housing by a sliding device. The sliding housing continues to face the first housing when it moves. The folding housing is coupled to the sliding housing by the second hinge part, the folding housing being rotatable about the second hinge axis, and the connecting device is coupled to the first housing and the folding housing to automatically slide the sliding housing in response to movement of the folding housing.

Embodiments of the present invention provide a portable apparatus including a first housing, a first keyboard, a second keyboard, and a connecting device. The first keyboard faces the first housing and is coupled to the first housing by a sliding device. The first keyboard continues to face the first housing when it moves. The second keyboard is coupled to the sliding housing by a second hinge, the second keyboard being rotatable about a second hinge axis, and the connecting device is coupled to the first housing and the first keyboard to automatically move the first keyboard in response to movement of the second keyboard.

Embodiments of present invention provide a portable apparatus including a first housing, a first keyboard, a second keyboard, and a connecting device. The first housing includes a battery housing. The battery housing is a protrusion of the first housing that extends in a longitudinal direction thereof. The first keyboard faces the first housing and is coupled to the first housing by a sling module. The first keyboard continues to face the first housing when it moves. The second keyboard is coupled to a sliding housing by a second hinge part, the second keyboard being rotatable about a second hinge axis, and the connecting device is coupled to the battery housing and the first keyboard to automatically move the first keyboard in response to movement of the second keyboard.

It is to be understood that both the foregoing general description and the following detailed description are exemplary and explanatory and are intended to provide further explanation of the invention as claimed.

The accompanying drawings, which are included to provide further understanding of the invention and are incorporated in and constitute a part of this specification, illustrate embodiments of the invention, given by way of example only, and together with the description serve to explain the principles of the invention.
FIG. 1 is a perspective view showing a portable apparatus according to an exemplary embodiment of the present invention.
FIG. 2 is a perspective view showing a portable apparatus in which the second housing is rotated with respect to the first housing.
FIG. 3 is a perspective view showing a portable apparatus in which a sliding housing is moved according to the rotation of a folding housing of the portable apparatus according to an exemplary embodiment of the present invention.
FIG. 4 is a perspective view showing an open state of a portable apparatus according to an exemplary embodiment of the present invention.
FIG. 5 is an enlarged plan view showing a connecting device of a portable apparatus according to an exemplary embodiment of the present invention.
FIG. 6 is a front view showing a mounted state of a sliding module of a portable apparatus according to an exemplary embodiment of the present invention.
FIG. 7 is a front view showing a bottom surface of a folding housing employed in a portable apparatus according to an exemplary embodiment of the present invention.
FIG. 8 is a sectional view showing a structure of a sliding apparatus employed in a portable apparatus according to an exemplary embodiment of the present invention.
FIG. 9 is a sectional view taken along X-X line of FIG. 8.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will convey the scope of the invention to those skilled in the art. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

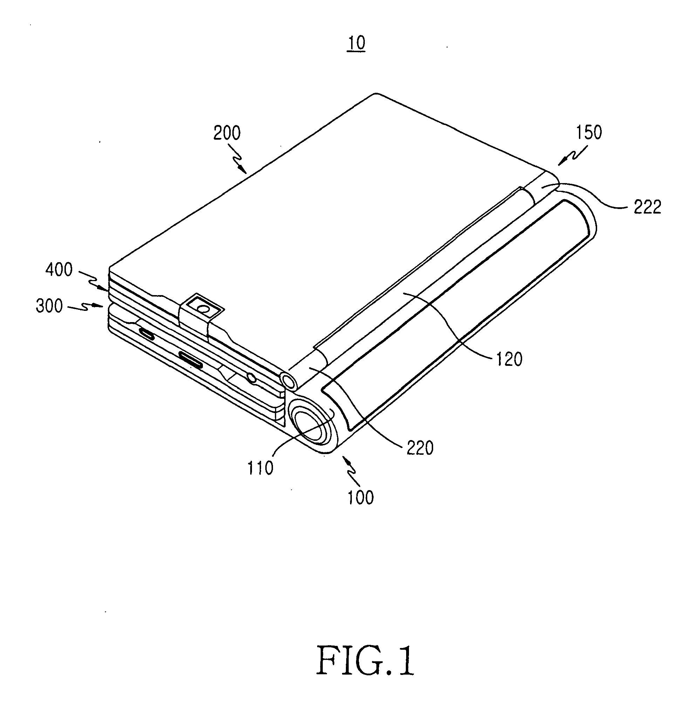

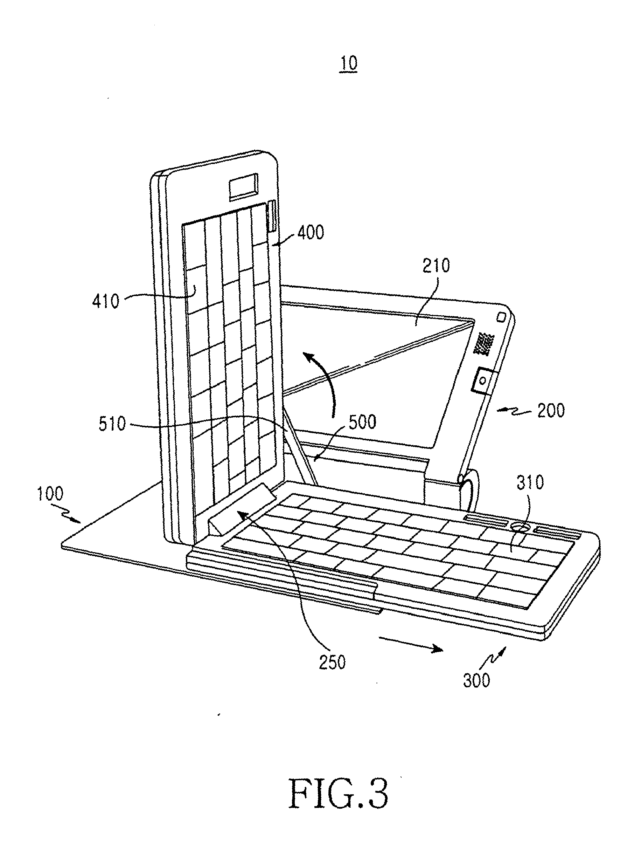

As shown in FIG. 1 and FIG. 3, a portable apparatus 10 according to an exemplary embodiment of the present invention is an apparatus having a user interface (UI) environment suitable for multimedia environment. The portable apparatus 10 may provide convenient data input/output operation, may have better portability due to a size-reduction thereof even though it has a wide display, and may provide a convenient portable Internet function as well as a convenient game function. Additionally, the portable apparatus 10 may include two folding-type keyboards that may be configured such that the rotation of one keyboard causes the sliding of the other keyboard. Therefore, the portable apparatus 10 is a communication apparatus that may include keyboards that can be conveniently opened and closed and may allow a portable Internet function or a game function to be conveniently utilized regardless of the place and the time.

The portable apparatus 10 according to the exemplary embodiment of the present invention includes a first housing 100, a second housing 200, a sliding housing 300, a folding housing 400, and a connecting device 500 that creates a sliding force of the sliding housing 300 from a rotational force of the folding housing 400.

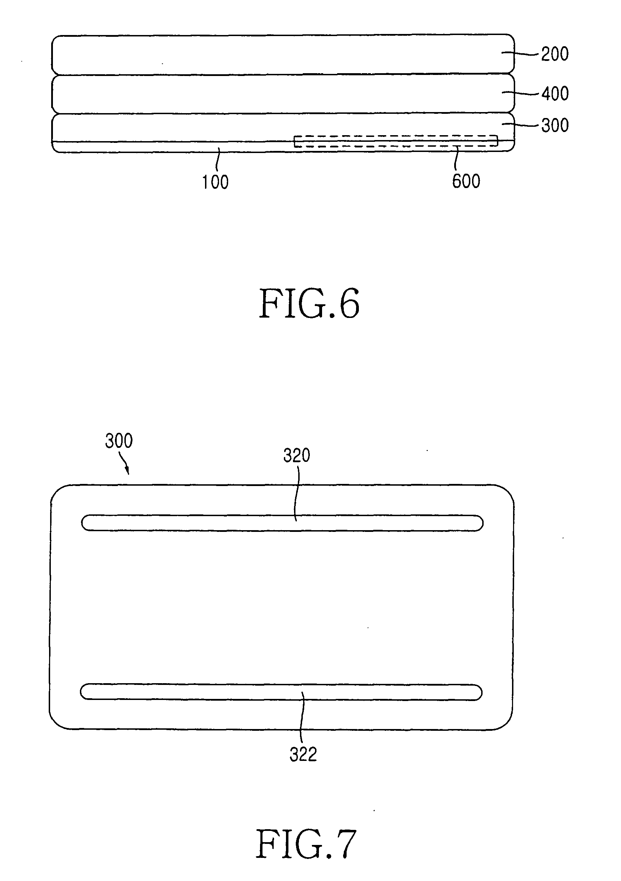

The second housing 200 is rotatably coupled to the first housing 100 by the first hinge part 150 such that the second housing 200 can be rotated about the first hinge axis A 1 to fold onto or unfold from an upper surface of the first housing 100. The first hinge axis A 1 extends in a longitudinal direction of the first housing 100 and the second housing 200. The sliding housing 300 is mounted on the first housing 100 by a sliding module 600 (shown in FIG. 6 and FIG. 7) and faces the first housing 100. The sliding housing 300 continues to face the first housing 100 when the sliding housing 300 moves. The sliding housing 300 slides along the longitudinal direction of the first housing 100, for example, along a transverse direction.

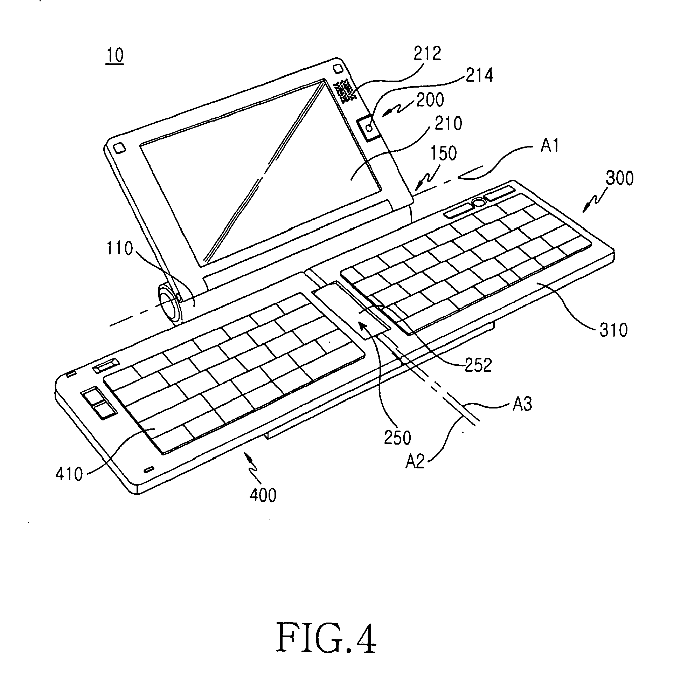

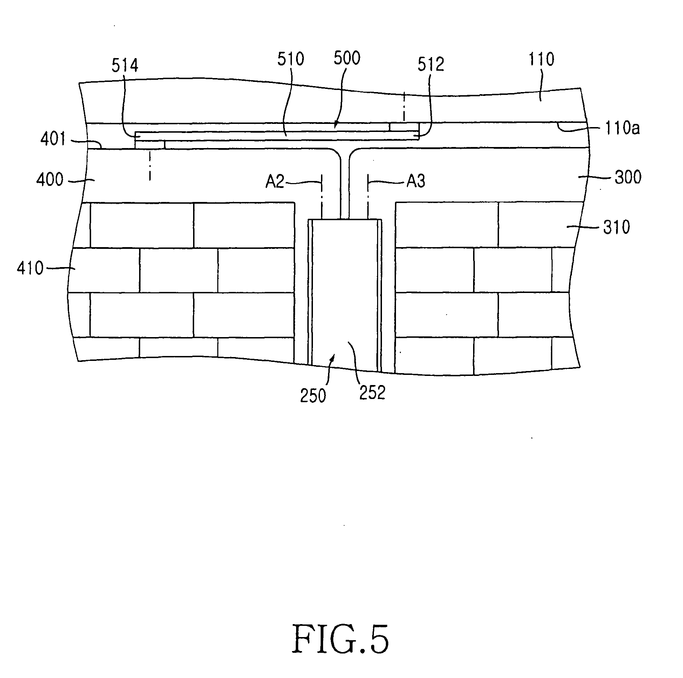

The folding housing 400 is coupled with the sliding housing 300 by the second hinge part 250 such that the folding housing 400 can be rotated about the second hinge axes A2 and A3 (shown in FIG. 4 and FIG. 5). The folding housing 400 may be a folding-type version of the sliding housing 300. According to such a structure, the direction of the first hinge axis A1 and the movement direction of the sliding housing 300 may be parallel to each other. The first hinge axis A1 may be perpendicular to and spaced apart from the second hinge axes A2 and A3.

Additionally, the second housing 200 may be rotated respective to the first housing 100 in an up or down direction so as to fold onto or unfold from the first housing 100. The folding housing 400 may be rotated respective to the sliding housing 300 in a left or right direction so as to fold onto or unfold from the sliding housing 300.

The connecting device 500 is mounted between the first housing 100 and the folding housing 400. Therefore, the connecting device 500 may automatically move the sliding housing 300 according to the rotation of the folding housing 400. For example, when the folding housing 400 is rotated, the connecting device 500 moves the sliding housing 300 away from the folding housing 400 along the longitudinal direction of the first housing 100. As a result, the folding housing 400 and the sliding housing 300 may be symmetrically arranged on the first housing 100. Such a state is shown in FIG. 4. The second keyboard 410 is disposed at the left side of the first housing 100, and the first keyboard 310 is disposed at the right side thereof.

As shown in FIG. 3 and FIG. 5, the connecting device 500 may be a connecting bar 510 and may be made of metal material. One end 512 of the connecting bar 510 may be rotatably coupled to the first housing 100 and the other end 514 of the connecting bar 510 may be rotatably coupled to the folding housing 400. For example, one end 512 of the connecting bar 510 may be rotatably coupled to an inner wall 110a (shown in FIG. 5) of a battery housing 110, which will be described below, of the first housing 100, and the other end 514 of the connecting bar 510 may be rotatably coupled to a side surface 401 (shown in FIG. 5) of the folding housing 400. Particularly, one end 512 of the connecting bar 510 may be a fixed rotational shaft and the other end 514 of the connecting bar 510 may be a moving rotational shaft.

Therefore, when the folding housing 400 rotates, the rotational force of the folding housing 400 may automatically create a sliding force of the sliding housing 300, while centering one end 512 of the connecting bar 510, so that the sliding housing 300 may move.

As shown in FIG. 1 and FIG. 4, one end of the first housing 100 protrudes to form a battery housing 110. The battery housing 110may have a cylindrical shape and may house a battery (not shown).

As shown in FIG. 4, the second housing 200 includes a display part 210 mounted on an inner surface thereof, a rotatable camera lens housing 214 arranged next to the display part 210, and a speaker device 212 arranged next to the display part 210. The rotatable camera lens housing 214 can be rotated so that a lens housed therein is arranged toward an inner surface or an outer surface of the second housing 200.

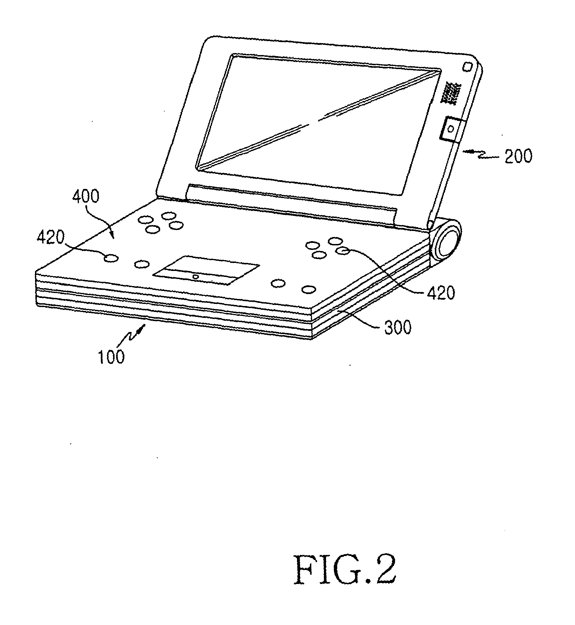

The sliding housing 300 includes a first keyboard 310 having a plurality of first keys arranged on an inner surface thereof. The folding housing 400 includes a second keyboard 410, which has a plurality of second keys arranged on an inner surface thereof, and a third keyboard 420 (shown in FIG. 2), which has a plurality of third keys, arranged on an outer surface thereof. The first and second keyboards 310 and 410 may have a QWERTY arrangement when unfolded. The third keyboard 420 may include keys for a game mode. Particularly, the third keyboard 420 may include two 4-direction keys. Additionally, the second and third keyboards 410 and 420 may be arranged on the inner and outer surfaces of the folding housing 400, respectively, so that the folding housing 400 may be used as a two-sided keyboard.

As shown in FIG. 1, the first hinge part 150 includes a center hinge arm 120 disposed on the first housing 100 and a pair of side hinge arms 220 and 222 disposed on the second housing 200 and coupled to each other by a hinge module and a hinge dummy, respectively, which are not shown in the center hinge arm 120.

As shown in FIG. 4 and FIG. 5, the second hinge part 250 may rotatably connect the sliding housing 300 and the folding housing 400 with each other with a dual-hinge member 252. The dual-hinge member 252 provides the second and third hinge axes A2 and A3 and has one end rotatably coupled to the sliding housing 300 and the other end rotatably coupled to the folding housing 400.

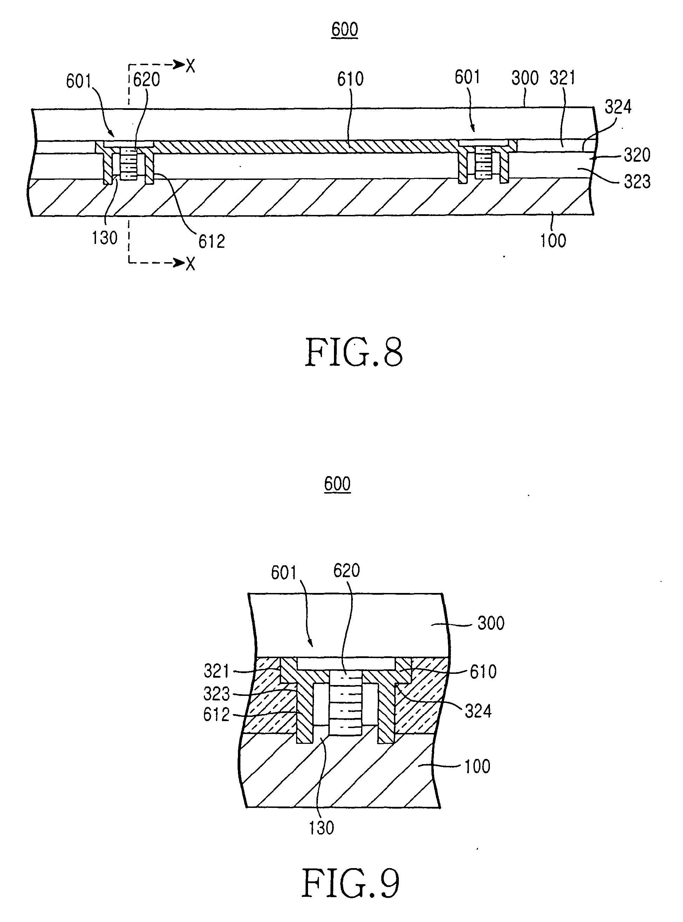

With reference to FIG. 6 to FIG. 9, a structure of a sliding device 600 according to an exemplary embodiment of the present invention will be described below. The sliding device 600 is mounted between the first housing 100 and the sliding housing 300. The sliding device 600 includes a pair of openings 320 and 322 (shown in FIG. 7) at the bottom surface of the sliding housing 300. A pair of guide fastening parts 601 (only one guide fastening part is shown) are inserted into the openings 320 and 322, respectively, to control the movement of the sliding housing 300. Both of the openings 320 and 322 and the guide fastening parts 601 may be symmetrical to each other so as to be assembled with each other in the same manner. Therefore, only a guide fastening member 601 mounted in one opening 320 is described.

The opening 320 extends from the bottom surface of the sliding housing 300 and has a linear shape. The opening 320 may have a stepped shape 324 formed along the periphery thereof. Particularly, the opening 320 is divided into first and second areas 321 and 323. The first area 321 is an area receiving a guide member 610, which will be described below, and the second area is an area receiving a protuberance 612, which will be described below.

The guide fastening part 601 is received in the opening 320 so that the movement of the sliding housing 300 with respect to the first housing 100 may be restricted by the opening 320. The guide fastening part 601 includes the guide member 610, which may have a sheet-shape, and a pair of fastening areas 130 disposed adjacent to the first housing 100 to couple the guide member 610 with one of the fastening areas 130 with a screw 620 in a vertical direction. The ends of the guide member 610 are coupled with the fastening areas 130 of the first housing 100, respectively, with a screw 620.

The guide member 610 may have a long bar shape and includes the protuberance 612 extending from the bottom surface of the body thereof in a lower direction. The protuberance 612 is received into the second area 323 to couple the guide member 610 to the fastening area 130 with a screw 620.

When the user rotates the folding housing 400, the connecting device 500 and the sliding device 600 move the sliding housing 300 in the direction of the openings 320 and 322.

Accordingly, exemplary embodiments of the present invention have a wide, folding-type display part that may be shown in a transverse mode and cradled at an angle. Although the first and second keyboards may be folding-types and have a structure in which the movement of one keyboard automatically moves the other keyboard to provide a key arrangement having keys operable by two hands, the entire portable apparatus is not bigger than a conventional portable apparatus, and therefore a more convenient UI environment may be provided and better portability may be secured.

As shown in FIG. 2, the display part 210 may be cradled at an angle so that a user may conveniently use a keyboard for a game function in a game mode. In the state shown in FIG. 4, the user may conveniently see the date displayed on the display part 210, and the folding-type keyboard including the first and second keyboards 310 and 410 allows the user to perform key-operation using both hands. Also, the movement of only one keyboard causes movement of the other keyboard, which enables a user to conveniently open and close the keyboards. Therefore, a user may use the keyboard in a multimedia environment that provides various modes, i.e. in a portable Internet mode, including a QWERTY mode.

As described above, in a multimedia environment, even when only one keyboard is moved, the other keyboard moves automatically, so that the keyboards may be conveniently opened and closed. Therefore, a data input/output UI may be improved, a size-reduction thereof may be secured, and portability may be improved.

Particularly, exemplary embodiments of the present invention may be conveniently used in a portable Internet mode, a game mode, a QWERTY mode, a DMB mode, etc. Furthermore, the exemplary embodiments of the present invention allow a user to input data using both hands and may provide a display part in a transverse mode, which may improve the UI environment related to inputting/outputting data.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A portable apparatus, comprising:
a first housing;
a second housing coupled to the first housing by a first hinge part, the second housing being rotatable about a first hinge axis to fold onto and unfold from the first housing;
a sliding housing facing the first housing and coupled to the first housing by a sliding device, the sliding housing continuing to face the first housing when moved;
a folding housing coupled to the sliding housing by a second hinge part, the folding housing being rotatable about a second hinge axis; and
a connecting device mounted between the first housing and the folding housing to slide the sliding housing in response to movement of the folding housing.

2. The portable apparatus of claim 1, wherein a direction of the first hinge axis and a movement direction of the sliding housing are parallel to each other, and the first hinge axis and the second hinge axis are perpendicular to each other and spaced apart from each other.

3. The portable apparatus of claim 1, wherein the second hinge part includes a dual-axis hinge member comprising two hinge axes.

4. The portable apparatus of claim 1, wherein the connecting device comprises a first end rotatably coupled to the first housing and a second end rotatably coupled to the folding housing, the first end being a fixed rotational shaft and the second end being a moving rotational shaft.

5. The portable apparatus of claim 4, wherein rotational axes of the first end and the second end of the connecting device are parallel to the second hinge axis.

6. The portable apparatus of claim 4, wherein the connecting device has a bar shape and comprises a metallic material.

7. The portable apparatus of claim 1, wherein the sliding housing moves away from the folding housing along a longitudinal direction of first housing of the portable apparatus according to rotation of the folding housing so that the sliding housing is symmetrical to the folding housing on the first housing.

8. The portable apparatus of claim 1, wherein the second housing comprises a display, a rotatable camera lens housing , and a speaker device.

9. The portable apparatus of claim 1, wherein the sliding housing comprises first keys arranged on an inner surface of the sliding housing,
wherein the folding housing comprises second keys together arranged on an inner surface of the folding housing and third keys arranged on an outer surface of the folding housing, and
wherein the first keys and the second keys together have a QWERTY arrangement, and the third keys are for a game function.

10. The portable apparatus of claim 1, wherein the sliding device 600 is mounted between the first housing 100 and the sliding housing 300 and the sliding device comprises:
an opening at a bottom surface of the sliding housing;
a guide fastening part inserted into the opening to couple the sliding housing to the first housing,
wherein the opening has a stepped shape disposed along a periphery of the opening and is divided into a first area and a second area, and
wherein the guide fastening part comprises a guide member having a link-shape and is received into the first area.

11. A portable apparatus, comprising:
a first housing;
a display part coupled to the first housing by a first hinge part, the display part being rotatable about a first hinge axis to fold onto or unfolded from the first housing;
a first keyboard facing the first housing and coupled to the first housing by a sliding device, the first keyboard continuing to face the first housing when moved;
a second keyboard coupled to the first keyboard by a second hinge part, the second keyboard being rotatable about a second hinge axis; and
a connecting device coupled to the first housing and the second keyboard to slide the first keyboard in response to movement of the second keyboard.

12. The portable apparatus of claim 11, wherein the second keyboard is a two-sided keyboard comprising keys arranged on an inner surface of the second keyboard and keys arranged on an outer surface of the second keyboard.

13. A portable apparatus, comprising:
a first housing;
a sliding housing facing the first housing and coupled to the first housing by a sliding device, the sliding housing continuing to face the first housing when moved;
a folding housing coupled to the sliding housing by a hinge part, the folding housing being rotatable about a hinge axis; and
a connecting device coupled to the first housing and the folding housing to automatically slide the sliding housing in response to movement of the folding housing.

14. The portable apparatus of claim 13, wherein the folding housing has an inner surface on which a plurality of keys are arranged and an outer surface on which a plurality of keys are arranged.

15. A portable apparatus, comprising:
a first housing;
a first keyboard facing the first housing coupled to the first housing by a sliding module, the first keyboard continuing to face the first housing when moved;
a second keyboard connected with the first keyboard by a hinge part, the second keyboard being rotatable about a hinge axis; and
a connecting device coupled to the first housing and the first keyboard to automatically move the second keyboard in response to movement of the second keyboard.

16. The portable apparatus of claim 15, wherein the second keyboard is a two-sided keyboard having an inner surface on which a plurality of keys are arranged and an outer surface on which a further plurality of keys are arranged.

17. A portable apparatus, comprising:
a first housing comprising a battery housing, the battery housing being a protrusion of the first housing that extends in a longitudinal direction thereof;
a first keyboard facing the first housing and coupled to the first housing by a sliding module, the first keyboard continuing to face the first housing when moved;
a second keyboard coupled to a first housing by a hinge part, the second keyboard being rotatable about a hinge axis; and
a connecting device coupled to the battery housing and the first keyboard to automatically move the first keyboard in response to movement of the second keyboard.
